# EUROPEAN PATENT SPECIFICATION

(11) **EP 3 224 519 B1**
(45) Date of publication and mention of the grant of the patent: **23.07.2025**
(21) Application number: 15801183.3
(22) Date of filing: 27.11.2015
(51) Int. Cl.: F16L 13/02, B23K 9/028

(54) **FLUID CONDUIT ELEMENT AND METHOD FOR PRODUCING THE FLUID CONDUIT ELEMENT**
FLUIDLEITUNGSELEMENT UND VERFAHREN ZUR HERSTELLUNG DES FLUIDLEITUNGSELEMENTS
ÉLÉMENT DE CONDUIT DE FLUIDE ET SON PROCÉDÉ DE PRODUCTION

(30) Priority: 28.11.2014 EP 14195369
(43) Date of publication of application: 04.10.2017
(73) Proprietor: General Electric Technology GmbH, 5400 Baden (CH)
(72) Inventor: BUETIKOFER, Roland, 5304 Endingen (CH); RADIS, Rene, 8003 Zurich (CH); PITRUN, Miroslav, 5303 Wuerenlingen (CH)
(74) Representative: Novagraaf Group
(86) International application number: PCT/EP2015/077908
(87) International publication number: WO 2016/083573

(56) References cited:
- EP-A1- 2 612 723
- DE-A1- 102010 050 720
- GB-A- 774 967
- US-A- 3 727 025
- US-A- 4 318 966

## Description

### TECHNICAL FIELD OF INVENTION

The present disclosure generally relates to the field of fluid conduit systems and in particular to fluid conduit systems in which e.g. piping sections consisting of different materials are joined. More specifically it relates to a fluid conduit element as described in the preamble of claim 1. It furthermore relates to a method for joining members of a fluid conduit element.

### BACKGROUND OF INVENTION

In fluid conduit systems such as e.g. used for guiding fluids in power generation equipment, but also in process engineering and many other fields, it is often desired to join conduit segments made from different materials. For instance pipes and other conduits are frequently made from martensitic or ferritic steels, such as for instance frequently used ASME SA335 ferritic steel. It may be desirable to join said conduit to a conduit segment or connect it to another type of fluid conduit component made from austenitic steel or a nickel base material. Typically these members made from dissimilar materials may be joined in applying a welding process, resulting in what is known as a dissimilar metal weld (DMW) interface. Typically said welding process comprises applying standard V- or narrow gap butt welding on the outside of the fluid conduit. As a result of the welding process complex metallurgical conditions are found at the fusion line, which include, but are not limited to, hard and brittle martensite layers next to austenitic phase materials, carbon depleted zones, brittle precipitates and the like. As will be readily understood such conditions may lead to early failure of the fluid conduit at the dissimilar metal weld connection. Also certain parameters of the dissimilar materials may differ considerably. For instance the thermal expansion coefficient of austenitic steels may be some 50% higher than that of ferritic steels. This results in differential thermal expansion and inducing alternating complex three dimensional loads at the metallurgically critical fusion line through every thermal cycle of the fluid conduit system. Moreover, the welding process itself, in particular the welding applied from outside, with related heat intake into the material, will result in residual three-dimensional loads and more in particular in residual tension stresses at the weld connection. As a result the fluid conduit at the fusion line, in particular a weld fusion line, may suffer an increased vulnerability to an early crack initiation, particularly in thermal cycling load situation.

The issue may be addressed by regular inspection and early replacement if needed.

In other approaches the issue is addressed in optimizing the material properties at the fusion line, such as in applying specific filler materials, base metals, post weld heat treatment, adapting the operation parameters, avoiding additional bending in the critical region and so forth. It will become apparent that these measures may compromise other performance aspects of the fluid conduit. Approaches to metallurgical optimization are for example described in J.N. DuPont and R.E. Mizia: "Review of Dissimilar Welding for the NGNP Helical-Coil Steam Generator", Lehigh University and Idaho National Laboratory "Next Generation Nuclear Power Plant Project", (2010) INL/EXT-10-18459, and C.D. Lundin: "Dissimilar Metal Welds . Transition Joints Literature Review", Welding Research Supplement (1982): 58-63.

### SUMMARY OF THE INVENTION

It is a subject of the device and the method disclosed herein to address the problems related to joining dissimilar materials, in particular dissimilar metals, e.g. by welding. In one more specific aspect of this disclosure dissimilar metal welding is addressed. In another aspect of the disclosure alternative solutions to those known from the art shall be provided. In still another aspect an improvement of the solutions known in the art shall be provided. Such a joint is for example known from document US4318966.

This is achieved by the device described in claim 1 and by the method described in the independent method claim 8.

Accordingly, a fluid conduit element is proposed comprising a first conduit member and a second conduit member wherein the two conduit members are joined to each other. Each fluid conduit member comprises a liner and a joint face at which the conduit members are joined to each other. Joining and connecting the two members to each other may be effected by a substance-to-substance bond, as for instance in a weld connection. Other bonding techniques may be applied. As becomes readily apparent, the liner of a fluid conduit member delimits an inner fluid conduit space, wherein the liner provides a fluid conduit inner wall delimiting the fluid conduit space, and a fluid conduit member outer wall, and will furthermore provide faces at which the fluid conduit space is open. The first conduit member comprises a joint face which is convexly shaped. That is to say generally a first conduit member inner wall extends axially further on the joint face than a first conduit member outer wall. This may generally be achieved in any stepped or continuous manner; however, as outlined below it might under certain conditions be found beneficial to provide a chamfer, and in particular a straight chamfer, on the conduit wall at the joint face. The second conduit member comprises a joint face which is concavely shaped. That is to say generally a second conduit member outer wall extends axially further on the joint face than a second conduit member inner wall. This again may generally be achieved in any stepped or continuous manner; however, as outlined below it might under certain conditions be found beneficial to provide a chamfer, and in particular a straight chamfer, on the conduit wall at the joint face. A straight chamfer in this context shall be understood as a chamfer having a unique and constant chamfering angle. As noted above the front faces are provided on the liner. The convex or concave geometry is essentially defined by that of the respective fluid conduit member liner on the side of the respective joint face. Further a buttering layer is bonded to at least one of the first and second conduit member liners and arranged on at least one of the respective joint face and the outer wall of the respective conduit member liner in an axial section abutting the respective joint face. That is to say the buttering layer in one embodiment covers the respective liner face on the side of the fluid conduit member joint face and thus forms part of the fluid conduit member joint face. The buttering layer is arranged in a collar-like manner around the outer wall of the fluid conduit member, or the liner, respectively, alona a section of the outer wall and abutting the joint face. The buttering layer is arranged on the joint face side of the liner as well as on the outer wall.

While essentially the liner face determines the geometry as outlined above, and the liner face is the physical element taking part in bonding the first and second fluid conduit members together, in the following reference will generally be made to the joint faces. The skilled person will readily appreciate and understand this generalization and the meaning of the generalized terms used herein.

It has been shown that in applying the joint face geometry as outlined above and joining the fluid conduit members at their joint faces compressive stresses instead of tensile stresses are induced at the critical fusion line formed at the interface between the two conduit members. The buttering layer, dependent on the material used, may provide some enhanced elasticity as compared to the fluid conduct member liners, or the materials applied for those, respectively, and thus reduce and/or bear stresses in the fusion line. Such stresses may on the one hand be induced by residual stresses from a thermal bonding process such as e.g. welding and may be superimposed by the load during operation of the piping system in which the fluid conduit element is used. The buttering layer may also serve to provide the metallurgical interface when applying substance-to-substance bonds, and may in particular prevent undesirable dilution effects typically occurring during dissimilar welding. In particular fatigue resistance is thus largely enhanced as compared to the case when the fluid conduit members are joined by e.g. standard V- or narrow gap butt welding.

In one embodiment of the disclosure the buttering layer is made from a material different than each of the first and second conduit member liners and is in particular welded onto at least one of the first and second conduit member liners. Such may be effected by additive welding of the buttering layer onto the respective conduit member.

In a further aspect the buttering layer is provided on and may be bonded to the second conduit member liner, that is on or abutting the concave face.

In still a further aspect the first and second conduit member liners are made from different materials. In particular one of the liners is made from an austenitic material and the other liner is made from one of a ferritic and a martensitic material. In particular the first conduit member liner may be made from an austenitic material, that is more specifically austenitic steel, or a nickel base alloy, and the second conduit member liner may be made from either a ferritic material or a martensitic material, that is more specifically a ferritic or a martensitic steel. That is, a fluid conduit member comprising a liner made from an austenitic material is provided with a convex joint face, while a fluid component member comprising a liner made from a ferritic or martensitic material is provided with a concave joint face. An example of a ferritic steel may be provided by widely used ASME SA335. An example of austenitic steel may be provided by ASME SB446. The buttering layer may be made from an austenitic alloy, such as e.g. NiCrMo-3.

In one embodiment according to the present disclosure the buttering layer is provided on the liner of one of the fluid conduit members only. In a more specific embodiment the buttering layer is provided on the liner of the fluid conduit element which is provided with a concave joint face. In still another embodiment the buttering layer is provided on a fluid conduit member liner made from a ferritic, or martensitic material.

The joint faces are formed such that the joint face of the first conduit member and the joint face of the second conduit member are shaped at least approximately complementary, such that when joining the two conduit members a residual gap at least approximately vanishes, or is minimized and consequently the fluid conduit members at their joint are at least essentially flush.

In an aspect of the present disclosure it might be found beneficial if the inner and outer diameters of the fluid conduit members match, that is to say are at least approximately identical.

Further, a joint face of at least one conduit member comprises a chamfered face, and in particular the joint face of the first conduit member comprises a convexly chamfered face and the joint face of the second conduit member comprises a concavely chamfered face, in particular with a straight chamfer. As noted above, and outlined in more detail below, this might be found advantageously in certain cases, in particular when e.g. Electron Beam Welding (EBW) is applied in bonding the fluid conduit members to each other.

In an embodiment according to the present disclosure a chamfer angle of a joint face as measured against the cross section of the joint face is between 20° and 60°, in particular between 25° and 45°, and more particular is between 25° and 35°. In a further aspect said chamfer angle as measured against a fluid conduit element axis is between 30° and 70°, in particular between 45° and 65°, and more particular is between 55° and 65°. Said axis may be defined as a center line of the fluid conduit inner wall, or a surface tangent thereto, at the joint face. It will be appreciated, that said axis does not need to be perpendicular to the cross section of the joint face, and the chamfer needs not to be symmetrical. However, in most cases said axis will be perpendicular to the cross section of the joint face, and the chamfer will be rotationally symmetrical. With symmetric configurations and/or with the axis being perpendicular to the cross section of the joint surface the assembly of the device will be facilitated, while otherwise an assembly in a defined orientation will be supported.

In a further aspect, the chamfer angle of the joint face of the first fluid conduit member is the same or substantially the same as the chamfer angle of the joint face of the second fluid conduit member.

In a further aspect of the disclosure, not claimed, the fluid conduit member is provided comprising a joint face which is concavely shaped whereby an outer wall extends axially further on the joint face than a member inner wall, and wherein further a buttering layer is provided on the conduit member and arranged on a fluid conduit member liner at least on one of the joint face side and the outer wall of the conduit member liner in an axial section abutting the joint face.

As will be readily appreciated, also a set of complementary first and second fluid conduit members of the kind described herein is disclosed, wherein the fluid conduit members are in particular complementary in a manner that their respective joint faces may be joined flush, and at least approximately without any residual gap between them.

According to another aspect of the invention described herein a method for producing a fluid conduit element is disclosed, the method comprising providing a first conduit member which comprises a first fluid conduit member liner, said first conduit member liner having a convexly shaped first face, providing a second conduit member which comprises a second fluid conduit member liner, said second conduit member liner having a concavely shaped second face,
producing a buttering layer on at least one of the second face and the outer wall of the second conduit member in an axial section abutting the second face, arranging the first and second conduit members such that the buttering layer and the first face are facing each other,
bonding the first and second conduit members. These steps are preferably carried out in this order, with the final two steps being arranging the members and bonding the members. According to an embodiment of the method an austenitic material or nickel base material such as e.g. NiCrMo-3 may be used to provide the buttering layer, while in a further embodiment the second member liner may be made from a ferritic or martensitic material. Producing the buttering layer may comprise one of a welding or a soldering step, and may in particular comprise a laser welding step. Bonding the first and second fluid conduit members may comprise a substance-to-substance bonding step, such as e.g. welding.

Further a heat treatment process and in particular a post weld heat treatment process may be applied to the second fluid conduit member after the buttering layer has been produced. This step may serve to reduce stresses in the interface between the buttering layer and the fluid conduit member liner which may arise due to the welding process, in particular when the materials of the buttering layer and the second fluid conduit member liner are dissimilar materials, in particular dissimilar metals, as previously described. It will further be appreciated that the method may comprise a machining step for the buttering layer before or after the heat treatment step. Thus a smooth and geometrically well-defined surface of the buttering layer especially at the joint face of the fluid conduit member may be achieved, which will facilitate joining it to the other fluid conduit member. In particular the chamfering angle may be accurately machined.

The method as described herein may also comprise one of a soldering and a welding step for joining the first and second conduit members. In one aspect of the invention electron beam welding, EBW, may be applied for autogenously joining the first and second fluid conduit members. EBW allows a deep welding in which fusion occurs through the whole wall thickness of the fluid conduit member liners as opposed to mere welding on the outside. Moreover, due to the speed of EBW the heat intake into the material of both conduit member liners is minimized, and moreover no material is added in this welding method, resulting in minimizing if not avoiding metallurgical issues due to microstructural transformations of the material at the welding interface. In particular in applying EBW it might be found beneficial it the faces of the fluid conduit members at the joint face are chamfered and, in a longitudinal section, show straight lines such that an electron beam applied for welding may reach through all the junction and thus the welding step may be applied, in particular as evenly as possible, to the entire wall thickness.

It will be understood that the features and embodiments outlined above may be readily combined with each other.

Summarizing, in applying the teaching of this disclosure and the claimed invention a material interface element may be provided for joining different materials in a piping system. That is, when providing the device as outlined above an element is provided with the critical steps of e.g. dissimilar metal welding completed, and the interface element may easily be integrated into a piping system in joining each of the members of the fluid conduit or material interface element at its free end to a piping end of similar material properties in a well known conventional manner. A free end in this context should be understood as any face in which the fluid conduit space opens out into the exterior, that is, there is an opening provided in the fluid conduit wall, except the joint face.

From a mechanical point of view some benefits of the invention as disclosed herein may for instance be seen in that due to the geometry of the joint faces tensile stresses at the dissimilar metal weld interface are reduced and/or instead compressive stresses are induced. Furthermore, the buttering layer may, apart from benefits it bears from the metallurgical and microstructural standpoint, serve to provide a layer which is comparatively flexible as compared to the material of the fluid conduct members themselves. Said benefit depends on the choice of material for the buttering layer, which may be a more tensile material than that used for a fluid conduct member liner.

Benefits on the process side may for instance be seen in the fact that the step of joining and bonding the dissimilar materials can be performed under the manufacturer's full control and applying advanced bonding technologies. The completed material interface element may then be installed on site, where it may easily be integrated into a piping system by joining each free end to a piping section of a respective similar material in a well known conventional manner. Further advantages and benefits of the invention disclosed herein may become apparent although they are not explicitly mentioned herein.

It is understood that the fluid conduit members referred to herein may be mere tubes of any cross sectional geometry, whereas circular cross sections may most frequently be used, but may also comprise, in particular at their free ends any geometries, such as to provide for instance a connecting piece for joining the fluid conduit element to a heat exchanger or other devices, may include fluid junctions and so forth.

### BRIEF DESCRIPTION OF THE DRAWINGS

The disclosure will become more readily apparent in view of the embodiments outlined below and with reference to the attached drawings. Said figures show in brief
- Fig. 1: a simplified schematic view of an exemplary embodiment of the fluid conduit element as described and claimed herein;
- Fig. 2: the first fluid conduit member of the exemplary embodiment;
- Fig. 3: the second fluid conduit member of the exemplary embodiment;
- Fig. 4: a view of the exemplary embodiment when completely assembled.

All figures show longitudinal sections of the exemplary embodiment. For the ease of understanding and depiction, features not essential for the invention and/or the understanding of the invention have been omitted.

### DETAILED DESCRIPTION OF AN EXEMPLARY EMBODIMENT OF THE INVENTION

An exemplary embodiment of a fluid conduit element or material interface element as herein disclosed is further depicted with reference to the figures of the disclosure. While in this exemplary embodiment the fluid conduit members are for the ease of graphic depiction and understanding simple tubes with a circular inner and outer cross section, it is noted that, as outlined above, the fluid conduit members may assume in principle any fancy geometries. Also the joint faces are shown only in an exemplary manner and may assume other geometries within the scope of the claims without deviating from the invention described and/or claimed herein.

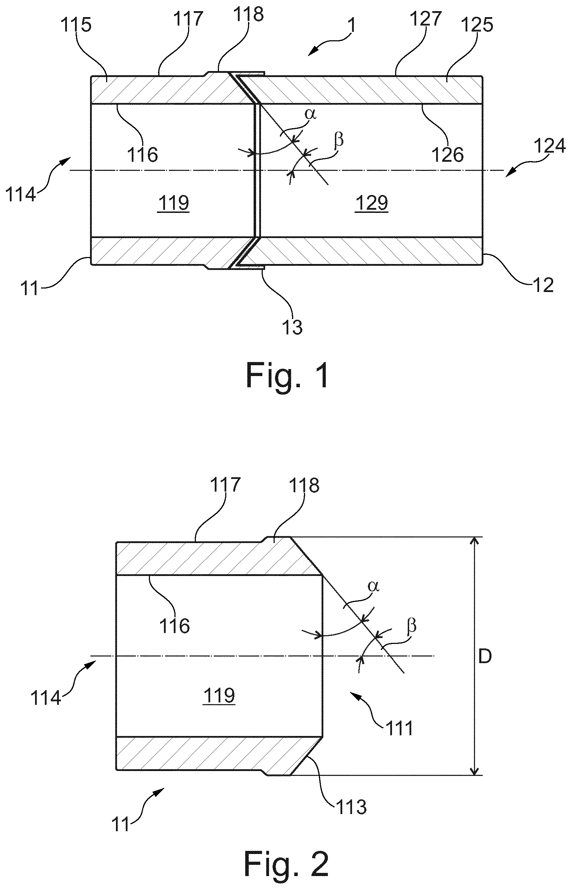

For the sake of a better understanding of the following explanations Fig. 1 shows a largely simplified representation of a fluid conduit element 1 within the scope of the invention. It essentially comprises a first fluid conduit member 11 and a second fluid conduit member 12 comprising a buttering layer 13 attached to the second fluid conduit member liner 125. In an exemplary embodiment, first fluid conduit member liner 115 may be made from an austenitic steel, such as e.g. ASME SB446. Second fluid conduit member liner 125 may for instance be made from a ferritic steel such as e.g. ASME SA335. Buttering layer 13 may for instance be made from NiCrMo-3. However said exemplary material specifications shall in no way be intended to limit the scope of the invention disclosed herein. As will be outlined in more detail below, buttering layer 13 is provided on a joint face of second fluid conduit member 12, or attached to second fluid conduit member liner 125, respectively, as well as in a collar-like manner on an outer surface 127 of second fluid conduit member 12. First fluid conduit member 11 comprises a liner 115, providing an inner wall 116 and an outer wall 117, and delimiting a fluid conduit space 119 inside. Moreover first fluid conduit member 11 in this exemplary embodiment comprises a collar 118 abutting first fluid conduit member joint face and serving to provide an enlarged outer diameter D matching that of the second fluid conduit member including buttering layer 13. Second fluid conduit member 12 comprises a liner 125, providing an inner wall 126 and an outer wall 127, and delimiting a fluid conduit space 129 inside. Fluid conduit liners 115, 125 are chamfered at their respective joint faces, with a chamfer angle α with respect to the respective joint front face, or at an angle β with respect to the respective fluid conduit member axis. At the joint face of first fluid conduit member 11 the chamfer is such that the joint face is convex, whereas at the joint face of the second fluid conduit member 12 the chamfering is such that the joint face is concave and complementary to that of the first fluid conduit member, as will be outlined in more detail below. Further, each fluid conduit member comprises a free end 114 and 124, respectively.

Fig. 2 depicts first fluid conduit member 11. First fluid conduit member 11 comprises, as noted, liner 115 which is chamfered with a circumferentially arranged chamfer 113 at the joint face 111. The chamfer is arranged with chamfer angles α and β measured with respect to a joint face cross section and a fluid conduit member axis, respectively, and such that the inner wall 116 extends axially further at the joint face than outer wall 117. First conduit member joint face 111 is thus convex. Circumferential collar 118 enlarges the outer diameter D of first fluid conduit member 11 at the joint face to essentially match that of first fluid contact member including the buttering layer.

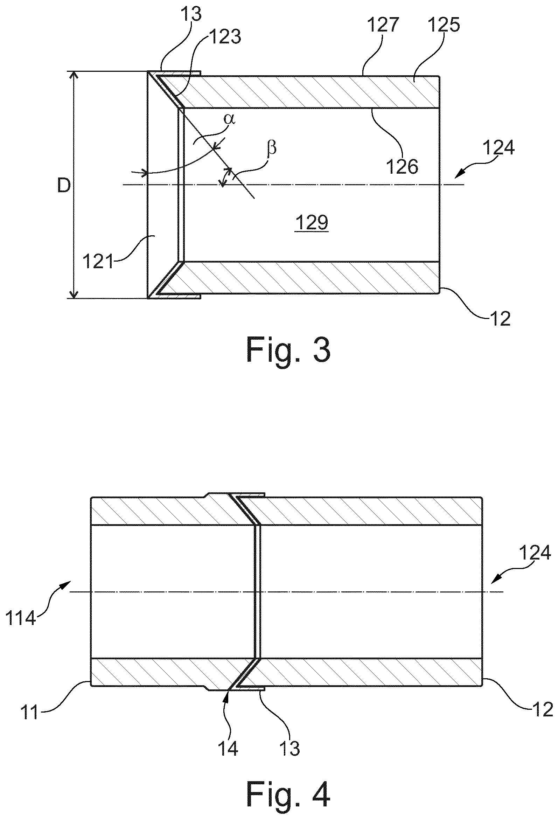

Fig. 3 depicts second fluid conduct member 12 in more detail. Second fluid conduit member 12 comprises liner 125 which is chamfered with a circumferentially arranged chamfer 123 at the joint face 121. The chamfer is arranged with chamfer angles α and β measured with respect to joint face cross section and a fluid conduit member axis, respectively, and such that the outer wall 127 extends axially further at the joint face than outer wall 126. Second conduit member joint face 121 is thus concave. Second fluid conduit member 12 further comprises buttering layer 13. Buttering layer 13 is arranged on the chamfer of the liner 125 at the joint face 121, and further in a collar-like manner around the second fluid conduit outer wall 127 along an axial span of the fluid conduit member abutting the joint face. Said collar enlarges the outer diameter of the second fluid contact member at the joint face to a diameter D. Buttering layer 13 may have been produced by an additive laser welding process. Post welding heat treatment may have been applied to the second fluid contact member after finishing the laser welding process. Also, the surface of buttering layer 13 may be machined to guarantee dimensional accuracy of the buttering layer, in particular to produce a well-defined chamfer angle and/or maintain the chamfer angle provided by the chamfer of liner 125. Buttering layer 13 may in particular be machined to provide a geometry complementary to that of the first fluid conduit member joint face. First and second fluid conduit members 11 and 12 may thus be arranged such that the respective joint faces fit flush together without any significant gap, as is shown in Fig. 1.

Figure 4 now depicts the fully assembled fluid conduit element. First and second fluid conduit members 11 and 12 are joined by a weld 14. Weld 14 may have been formed by an electron beam welding, EBW, process. Said EBW process allows to produce weld 14 such as to cover the entire joint surface of the liners. Weld 14 extends essentially in a uniform layer around the circumference of the fluid conduit element. As is seen the welding process is not performed between the liners themselves but between first fluid conduit member liner 11 and buttering layer 13. Thus the microstructure of the material of the second fluid conduit member liner 125 is not influenced by the welding process. Also, due to the characteristics of the EBW process heat intake into fluid conduit member liners 115, 125 during the welding process is minimized. Due to the geometry of the joint surfaces and the weld which includes the total available welding surface rather than a weld from outside tensile stresses are reduced and/or compressive stresses are induces in the fusion region. The buttering layer may serve as an elastic member for differential thermal expansion of the first and second fluid conduct members. Fatigue resistance is thus considerably improved when compared with the art. The resulting fluid conduit member comprises free ends 114, 124, which may be joined to pipes having material properties similar to that of the respective fluid conduit member liner by a conventional process without any issues related to dissimilar metal welding. In this respect the assembled fluid conduit element serves as a dissimilar material interface element.

The chamfer angle of the joint face of the first fluid conduit member 11 is preferably the same or substantially the same as the chamfer angle of the joint face of the second fluid conduit member 12, as shown in the Figures.

While the invention has been outlined by virtue of an exemplary embodiment it is understood that this embodiment is in no way intended to limit the scope of the claimed invention.

### LIST OF REFERENCE NUMERALS

- 1: fluid conduit element, material interface element
- 11: first fluid conduit member
- 12: second fluid conduit element
- 13: buttering layer
- 14: weld
- 111: first fluid conduit member joint face
- 113: chamfer
- 114: first fluid conduit member free end
- 115: first fluid conduit member liner
- 116: first fluid conduit member inner wall
- 117: first fluid conduit member outer wall
- 118: collar
- 119: first fluid conduit member fluid space
- 121: second fluid conduit member joint face
- 123: chamfer
- 124: second fluid conduit member free end
- 125: second fluid conduit member liner
- 126: second fluid conduit member inner wall
- 127: second fluid conduit member outer wall
- 129: second fluid conduit member fluid space
- D: outer diameter at the joint face
- α: chamfer angle measured against joint face cross section
- β: chamfer angle measured against axis

## Claims

1. A fluid conduit element (1), said fluid conduit element comprising a first fluid conduit member (11) and a second fluid conduit member (12), the fluid conduit members joined to each other, each fluid conduit member comprising a liner (115, 125) and a joint face (111, 121) at which joint face the fluid conduit members are joined to each other, wherein the first fluid conduit member joint face (111) is convexly shaped whereby a first fluid conduit member inner wall (116) extends axially further on the joint face than a first fluid conduit member outer wall (117),
the second fluid conduit member joint face (121) is concavely shaped whereby a second fluid conduit member outer wall (127) extends axially further on the joint face than a second fluid conduit member inner wall (126), **characterized in that** at least one of the first and second fluid conduit members (11, 12) comprises a buttering layer bonded to the respective fluid conduit member liner,
wherein the buttering layer (13) extends over at least on one of the respective joint face of the respective fluid conduit member liner and the outer wall of the respective fluid conduit member liner in an axial section abutting the respective joint face and further **in that in that** the joint face (111) of the first fluid conduit member and the joint face (121) of the second fluid conduit member are shaped at least approximately complementary, such that when joining the two fluid conduit members a residual gap at least approximately vanishes.

2. The fluid conduit element as claimed in claim 1, **characterized in that** the buttering layer (13) is made from a material different than each of the first and second fluid conduit member liners (115, 125) and is in particular welded onto at least one of the first and second fluid conduit member liners (115, 125).

3. The fluid conduit element as claimed in any of the preceding claims, **characterized in that** the buttering layer is provided on the second fluid conduit member liner (125).

4. The fluid conduit element as claimed in any of the preceding claims, **characterized in that** the first and second fluid conduit member liners (115, 125) are made from different materials, and in particular one of the liners is made from one of an austenitic material and a nickel base alloy, and the other liner is made from one of a ferritic and a martensitic material, and wherein in particular the first fluid conduit member liner (115) is made from an austenitic material and/or the second fluid conduit member liner (125) is made from one of a ferritic material and a martensitic material.

5. The fluid conduit element as claimed in any of the preceding claims, **characterized in that** a joint face (111, 121) of at least one fluid conduit member (11, 12) comprises a chamfered face, and in particular said chamfered face of the first fluid conduit member (11) is convexly chamfered and the chamfered face of the second fluid conduit member (12) is concavely chamfered.

6. The fluid conduit element as claimed in the preceding claim, **characterized in that** a chamfer angle (α) as measured against the cross section of the joint face is between 20° and 60°, in particular between 25° and 45°, and more particular is between 25° and 35°, and/or **characterized in that** a chamfer angle (β) as measured against a fluid conduit element axis is between 30° and 70°, in particular between 45° and 65°, and more particularly between 55° and 65°.

7. The fluid conduit element as claimed in the preceding claim, in which the chamfer angle of the joint face of the first fluid conduit member 11 is the same or substantially the same as the chamfer angle of the joint face of the second fluid conduit member (12).

8. A method for producing a fluid conduit element (1) as claimed in any preceding claim, the method comprising
providing the first fluid conduit member comprising a first conduit member liner (115), said first conduit member liner having a convexly shaped first face (111),
providing the second fluid component member comprising a second conduit member liner (125), said second fluid conduit member liner having a concavely shaped second face (121),
producing the buttering layer (13) extending over the second face (121) and the outer wall of the second conduit member liner in an axial section abutting the second face of the second conduit member liner,
arranging the first and second fluid conduit members (11, 12) such that the buttering layer (13) and the first face (111) face each other,
and bonding the first and second fluid conduit members to each other, wherein the step of arranging the first and second conduit members to each other comprises arranging the conduit members flush with each other.

9. The method as claimed in the preceding method claim, **characterized in that** the step of producing the buttering layer comprises a substance-to-substance bonding step, in particular one of a welding or a soldering step, and more in particular comprises a laser welding.

10. The method as claimed in any of the preceding method claims, **characterized in** applying a heat treatment process and in particular a post weld heat treatment process to the second fluid conduit member after the buttering layer has been produced.

11. The method as claimed in any of the preceding method claims, **characterized in** applying a machining step to the buttering layer.

12. The method as claimed in any of the preceding method claims, **characterized in that** joining the first and second conduit members comprises one of a soldering and welding step, and in particular comprises electron beam welding.

## Patentansprüche

1. Fluidleitungselement (1), wobei das Fluidleitungselement ein erstes Fluidleitungselement (11) und ein zweites Fluidleitungselement (12) umfasst, wobei die Fluidleitungselemente miteinander verbunden sind und jedes Fluidleitungselement einen Mantel (115, 125) und eine Verbindungsfläche (111, 121) umfasst, an der die Fluidleitungselemente miteinander verbunden sind, wobei die Verbindungsfläche (111) des ersten Fluidleitungselements konvex geformt ist, wodurch sich eine Innenwand (116) des ersten Fluidleitungselements axial weiter auf der Verbindungsfläche erstreckt als eine Außenwand (117) des ersten Fluidleitungselements,
die Verbindungsfläche (121) des zweiten Fluidleitungselements konkav geformt ist, wodurch sich eine Außenwand (127) des zweiten Fluidleitungselements axial weiter auf der Verbindungsfläche erstreckt als eine Innenwand (126) des zweiten Fluidleitungselements, **dadurch gekennzeichnet, dass** mindestens eines von dem ersten und dem zweiten Fluidleitungselement (11, 12) eine mit dem Mantel des jeweiligen Fluidleitungselements verbundene Pufferschicht aufweist,
wobei sich die Pufferschicht (13) in einem an die jeweilige Verbindungsfläche angrenzenden axialen Abschnitt über mindestens eines von der jeweiligen Verbindungsfläche des Mantels des jeweiligen Fluidleitungselements und der Außenwand des Mantels des jeweiligen Fluidleitungselements erstreckt und ferner dadurch, dass die Verbindungsfläche (111) des ersten Fluidleitungselements und die Verbindungsfläche (121) des zweiten Fluidleitungselements zumindest annähernd komplementär geformt sind, sodass beim Zusammenfügen der beiden Fluidleitungselemente ein Restspalt zumindest annähernd verschwindet.

2. Fluidleitungselement nach Anspruch 1, **dadurch gekennzeichnet, dass** die Pufferschicht (13) aus einem anderen Material als die Mäntel (115, 125) des ersten und zweiten Fluidleitungselements besteht und insbesondere auf mindestens einen der Mäntel (115, 125) des ersten und zweiten Fluidleitungselements geschweißt ist.

3. Fluidleitungselement nach einem der vorhergehenden Ansprüche, **dadurch gekennzeichnet, dass** die Pufferschicht auf dem Mantel (125) des zweiten Fluidleitungselements vorgesehen ist.

4. Fluidleitungselement nach einem der vorhergehenden Ansprüche, **dadurch gekennzeichnet, dass** die Mäntel (115, 125) des ersten und des zweiten Fluidleitungselements aus unterschiedlichen Materialien bestehen, und insbesondere einer der Mäntel aus einem austenitischen Material oder einer Nickelbasislegierung besteht und der andere Mantel aus einem ferritischen oder einem martensitischen Material besteht, und wobei insbesondere der Mantel des ersten Fluidleitungselements (115) aus einem austenitischen Material besteht und/oder der Mantel des zweiten Fluidleitungselements (125) aus einem ferritischen Material oder einem martensitischen Material besteht.

5. Fluidleitungselement nach einem der vorhergehenden Ansprüche, **dadurch gekennzeichnet, dass** eine Verbindungsfläche (111, 121) mindestens eines Fluidleitungselements (11, 12) eine abgeschrägte Fläche aufweist und insbesondere die abgeschrägte Fläche des ersten Fluidleitungselements (11) konvex abgeschrägt ist und die abgeschrägte Fläche des zweiten Fluidleitungselements (12) konkav abgeschrägt ist.

6. Fluidleitungselement nach dem vorhergehenden Anspruch,
**dadurch gekennzeichnet, dass** ein zum Querschnitt der Verbindungsfläche gemessener Fasenwinkel (α) zwischen 20° und 60°, insbesondere zwischen 25° und 45°, und weiter insbesondere zwischen 25° und 35° beträgt, und/oder
**dadurch gekennzeichnet, dass** ein zu einer Fluidleitungselementachse gemessener Fasenwinkel (β) zwischen 30° und 70°, insbesondere zwischen 45° und 65° und weiter insbesondere zwischen 55° und 65° liegt.

7. Fluidleitungselement nach dem vorhergehenden Anspruch, bei dem der Fasenwinkel der Verbindungsfläche des ersten Fluidleitungselements 11 der gleiche oder im Wesentlichen der gleiche ist wie der Fasenwinkel der Verbindungsfläche des zweiten Fluidleitungselements (12).

8. Verfahren zur Herstellung eines Fluidleitungselements (1) nach einem der vorhergehenden Ansprüche, das Verfahren umfassend
Bereitstellen des ersten Fluidleitungselements, das einen Mantel (115) des erste Leitungselements umfasst, wobei der Mantel des ersten Leitungselements eine konvex geformte erste Fläche (111) aufweist,
Bereitstellen des zweiten Fluidkomponentenelements, das einen Mantel (125) des zweiten Leitungselements umfasst, wobei der Mantel des zweiten Fluidleitungselements eine konkav geformte zweite Fläche (121) aufweist,
Herstellen der Pufferschicht (13), die sich in einem an die zweite Fläche des Mantels des zweiten Leitungselements angrenzenden axialen Abschnitt über die zweite Fläche (121) und die Außenwand des Mantels des zweiten Leitungselements erstreckt,
Anordnen des ersten und des zweiten Fluidleitungselements (11, 12) derart, dass die Pufferschicht (13) und die erste Fläche (111) einander zugewandt sind,
und Verbinden des ersten und zweiten Fluidleitungselements miteinander, wobei der Schritt des Anordnens des ersten und zweiten Leitungselements aneinander das bündige Anordnen der Leitungselemente zueinander umfasst.

9. Verfahren nach dem vorhergehenden Verfahrensanspruch, **dadurch gekennzeichnet, dass** der Schritt des Herstellens der Pufferschicht einen stoffschlüssigen Verbindungsschritt, insbesondere einen Schweiß- oder einen Lötschritt, und insbesondere ein Laserschweißen, umfasst.

10. Verfahren nach einem der vorhergehenden Verfahrensansprüche, **gekennzeichnet durch** das Anwenden eines Wärmebehandlungsprozesses und insbesondere eines dem Schweißen nachfolgenden Wärmebehandlungsprozesses bei dem zweite Fluidleitungselement, nachdem die Pufferschicht erzeugt wurde.

11. Verfahren nach einem der vorhergehenden Verfahrensansprüche, **gekennzeichnet durch** das Durchführen eines Bearbeitungsschritts an der Pufferschicht.

12. Verfahren nach einem der vorhergehenden Verfahrensansprüche, **dadurch gekennzeichnet, dass** das Verbinden des ersten und des zweiten Leitungselements einen Löt- oder Schweißschritt umfasst und insbesondere Elektronenstrahlschweißen umfasst.

## Revendications

1. Élément de conduit de fluide (1), ledit élément de conduit de fluide comprenant un premier organe de conduit de fluide (11) et un second organe de conduit de fluide (12), les organes de conduit de fluide étant reliés l'un à l'autre, chaque organe de conduit de fluide comprenant un revêtement (115, 125) et une face de liaison (111, 121), au niveau de la face de liaison, les organes de conduit de fluide sont reliés l'un à l'autre, dans lequel la face de liaison (111) de premier organe de conduit de fluide est de forme convexe, selon lequel une paroi interne de premier organe de conduit de fluide (116) s'étend axialement plus loin sur la face de liaison qu'une paroi externe de premier organe de conduit de fluide (117),
la face de liaison (121) de second organe de conduit de fluide est de forme concave, selon lequel une paroi externe de second organe de conduit de fluide (127) s'étend axialement plus loin sur la face de liaison qu'une paroi interne de second organe de conduit de fluide (126), **caractérisé en ce qu'**au moins l'un des premier et second organes de conduit de fluide (11, 12) comprend une couche de beurrage liée au revêtement d'organe de conduit de fluide respectif,
dans lequel la couche de beurrage (13) s'étend sur au moins l'une de la face de liaison respective du revêtement d'organe de conduit de fluide respectif et de la paroi externe du revêtement d'organe de conduit de fluide respectif dans une section axiale en butée contre la face de liaison respective et en outre **en ce que** la face de liaison (111) du premier organe de conduit de fluide et la face de liaison (121) du second organe de conduit de fluide sont formées au moins approximativement de manière complémentaire, de sorte que, lors de la liaison des deux organes de conduit de fluide, un espace résiduel disparaît au moins approximativement.

2. Élément de conduit de fluide selon la revendication 1,
**caractérisé en ce que** la couche de beurrage (13) est faite à partir d'un matériau différent de chacun des revêtements (115, 125) de premier et second organes de conduit de fluide et est en particulier soudée sur au moins l'un des revêtements (115, 125) de premier et second organes de conduit de fluide.

3. Élément de conduit de fluide selon l'une quelconque des revendications précédentes, **caractérisé en ce que** la couche de beurrage est prévue sur le revêtement (125) de second organe de conduit de fluide.

4. Élément de conduit de fluide selon l'une quelconque des revendications précédentes, **caractérisé en ce que** les des revêtements (115, 125) de premier et second organes de conduit de fluide sont fabriqués à partir de matériaux différents, et en particulier l'un des revêtements est fabriqué à partir d'un matériau austénitique et d'un alliage à base de nickel, et l'autre revêtement est fabriqué à partir d'un matériau ferritique et d'un matériau martensitique, et dans lequel, en particulier, le revêtement (115) de premier organe de conduit de fluide est fabriquée à partir d'un matériau austénitique et/ou le revêtement (125) de second organe de conduit de fluide est fabriquée à partir d'un matériau ferritique et d'un matériau martensitique.

5. Élément de conduit de fluide selon l'une quelconque des revendications précédentes, **caractérisé en ce qu**'une face de liaison (111, 121) d'au moins un organe de conduit de fluide (11, 12) comprend une face chanfreinée, et en particulier ladite face chanfreinée du premier organe de conduit de fluide (11) est chanfreinée de manière convexe et la face chanfreinée du second organe de conduit de fluide (12) est chanfreinée de manière concave.

6. Élément de conduit de fluide selon la revendication précédente,
**caractérisé en ce qu'**un angle de chanfrein (a) mesuré par rapport à la section transversale de la face de liaison est compris entre 20° et 60°, en particulier entre 25° et 45°, et plus particulièrement entre 25° et 35°, et/ou **caractérisé en ce qu'**un angle de chanfrein (P) mesuré par rapport à un axe d'élément de conduit de fluide est compris entre 30° et 70°, en particulier entre 45° et 65°, et plus particulièrement entre 55° et 65°.

7. Élément de conduit de fluide selon la revendication précédente, dans lequel l'angle de chanfrein de la face de liaison du premier organe de conduit de fluide 11 est identique ou sensiblement identique à l'angle de chanfrein de la face de liaison du second organe de conduit de fluide (12).

8. Procédé de fabrication d'un élément de conduit de fluide (1) selon l'une quelconque revendication précédente, le procédé comprenant
la fourniture du premier organe de conduit de fluide comprenant un revêtement (115) de premier organe de conduit, ledit revêtement de premier organe de conduit ayant une première face (111) de forme convexe,
la fourniture du second organe de composant de fluide comprenant un revêtement (125) de second organe de conduit, ledit revêtement de second organe de conduit de fluide ayant une seconde face (121) de forme concave,
la fabrication de la couche de beurrage (13) qui s'étend sur la seconde face (121) et la paroi externe du revêtement de second organe de conduit dans une section axiale en butée contre la seconde face du revêtement de second organe de conduit,
la disposition des premier et second organes de conduit de fluide (11, 12) de sorte que la couche de beurrage (13) et la première face (111) se fassent face,
et la liaison des premier et second organes de conduit de fluide l'un à l'autre, dans lequel l'étape consistant à disposer les premier et second organes de conduit l'un à l'autre comprend la disposition des organes de conduit au ras de l'un de l'autre.

9. Procédé selon la revendication précédente de procédé,
**caractérisé en ce que** l'étape consistant à fabriquer la couche de beurrage comprend une étape de liaison substance à substance, en particulier une étape de soudage ou de brasage, et plus particulièrement comprend un soudage laser.

10. Procédé selon l'une quelconque des revendications précédentes de procédé, **caractérisé par** l'application d'un processus de traitement thermique et en particulier d'un processus de traitement thermique post-soudage au second organe de conduit de fluide après la fabrication de la couche de beurrage.

11. Procédé selon l'une quelconque des revendications précédentes de procédé, **caractérisé par** l'application d'une étape d'usinage à la couche de beurrage.

12. Procédé selon l'une quelconque des revendications précédentes de procédé, **caractérisé en ce que** la liaison des premier et second organes de conduit comprend l'une d'une étape de brasage et de soudage, et en particulier comprend un soudage par faisceau d'électrons.
